# EUROPÄISCHE PATENTSCHRIFT

(11) **EP 2 554 344 B1**
(45) Veröffentlichungstag und Bekanntmachung des Hinweises auf die Patenterteilung: **29.10.2014**
(21) Anmeldenummer: 12153954.8
(22) Anmeldetag: 03.02.2012
(51) Int. Cl.: B26D 7/01, B26D 7/08, B65G 47/91

(54) **Vorrichtung und Verfahren zum Halten von Lebensmitteln**
Device and method for holding food products
Dispositif et procédé pour tenir des denrées alimentaires

(30) Priorität: 04.08.2011 EP 11176622
(43) Veröffentlichungstag der Anmeldung: 06.02.2013
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- EP-A1- 2 065 146
- DE-A1- 10 024 913
- DE-A1-102008 062 343
- US-A- 6 024 392
- US-A- 6 095 023

## Beschreibung

Die Erfindung betrifft eine Vorrichtung mit einem Sauggreifer, auch Vakuumgreifer genannt, zum periodischen bzw. zyklischen Halten und/oder Heben von Lebensmitteln, die gegen eine Ansaugöffnung der Vorrichtung angeordnet werden, sowie die Verwendung der Vorrichtung als Hebemittel, insbesondere für Lebensmittel, die schwer sind und/oder eine harte Oberfläche und/oder harte Bereiche aufweisen, sowie ein Verfahren zum zyklischen Anheben bzw. Transportieren von Lebensmitteln mittels der Vorrichtung. Die erfindungsgemäße Haltevorrichtung weist eine Ansaugöffnung auf, in die Unterdruck wirkt. Die Kanten der Ansaugöffnung, die das Lebensmittel kontaktieren, sind Schneidkanten, die nach Eindringen in das Lebensmittel eine zumindest anteilige Dichtung der Ansaugöffnung zum Lebensmittel bilden. Der Unterdruck kann durch einen angeschlossenen Unterdruckerzeuger angelegt werden und bevorzugt mit einem Antrieb erzeugt werden, der aus einer Druckluftquelle besteht, sodass der Sauggreifer ohne Unterdruckerzeuger und ohne elektrischen Antrieb für die Unterdruckerzeugung aufgebaut sein kann. Überdies betrifft die Erfindung ein Verfahren zum Halten von Lebensmitteln sowie ein Verfahren zur Herstellung von Lebensmitteln, das den Schritt des Haltens des Lebensmittels durch die Vorrichtung aufweist, insbesondere während des Schneidens des Lebensmittels. Die Vorrichtung und das damit durchgeführte Verfahren sind insbesondere an das Halten bzw. den Transport schwerer Lebensmittel angepasst, z.B. große Würste, Fleischstücke oder große Käse, z.B. jeweils mit einem Gewicht von mehr als 1kg oder mehr als 5kg, bevorzugt mehr als 10 oder mehr als 20kg. Bevorzugte Lebensmittel mit harter Oberfläche und/oder harten Bereichen sind Fleischstücke, die Knochen und/oder Sehnen in dem Bereich der Oberfläche aufweisen, in den die Schneidkante eindringt, oder getrocknete Lebensmittel, insbesondere getrocknete Fleisch- und Wurstwaren, z.B. getrockneter Schinken, Wurst nach Art einer Salami, sowie Hartkäse. In bevorzugter Ausführungsform ist die Haltevorrichtung Teil einer Zuführeinrichtung, z.B. für einen Slicer, oder ist als Teil einer Zuführeinrichtung mit einem Slicer verbunden.

### Stand der Technik

Generell ist für den Transport von Gegenständen bekannt, Sauggreifer auf deren Oberfläche anzuordnen, die Unterdruck mittels eines angeschlossenen Unterdruckerzeugers oder mit eingebauter Unterdruckpumpe erzeugen.

Die EP 2149517 A2 beschreibt einen Sauggreifer, der eine mit Druckluft betriebene Ejektordüse zur Erzeugung eines Unterdrucks an deren Saugseite aufweist und eine an der Saugseite angeschlossene Saugkammer, die eine von einem Gitter abgedeckte Saugöffnung aufspannt.

Bekannte Sauggreifer sind, wenn sie eine Unterdruckquelle oder eine Pumpe zur Erzeugung von Unterdruck aufweisen, für Verschmutzungen anfällig, da Anhaftungen oder lose Bestandteile des angesaugten Guts durch die Ansaugöffnung in die Unterdruckleitungen gelangen.

Die EP 2095919 A1, EP 2095918 A1 und EP 2095920 A1 beschreiben Haltevorrichtungen mit einer Ansaugöffnung, deren Kante für das Eindringen in Lebensmittel eine Schneidkante ist. Angrenzend an die Ansaugöffnung ist ein Kolben angeordnet, dessen Hub Unterdruck erzeugt.

### Aufgabe der Erfindung

Die Erfindung stellt sich daher die Aufgabe, eine alternative Vorrichtung und ein alternatives Verfahren für das Halten, den Transport und die Herstellung von Lebensmitteln bereitzustellen, die insbesondere schwere Lebensmittel und/oder Lebensmittel mit einer harten Oberfläche und/oder harten Bestandteilen sind. Insbesondere soll die Vorrichtung für das Halten bzw. Transportieren schwerer Lebensmittel mit Kontaktierung bzw. mit Eindringen der Vorrichtung in das Lebensmittel in geringem Ausmaß eingerichtet sein. Bevorzugt erfordert die Vorrichtung keinen Anschluss für eine Unterdruckquelle.

### Allgemeine Beschreibung der Erfindung

Die Erfindung löst die Aufgabe mit den Merkmalen der Ansprüche und stellt insbesondere einen Haltevorrichtung mit einer Saugöffnung bereit, die von Schneidkanten begrenzt wird. Die Schneidkante ist endständig an einem Leitungsabschnitt angeordnet, der den Saugabschnitt bildet und z.B. trichterförmig, zylindrisch oder glockenförmig sein kann. Die Schneidkanten begrenzen die Saugöffnung und sind vorzugsweise umfänglich um die Saugöffnung geschlossen, so dass die Saugöffnung vollständig von einer umlaufenden Schneidkante begrenzt bzw. umfasst ist. Der vom Leitungsabschnitt gebildete Saugabschnitt ist mit einem Unterdruckerzeuger verbunden, so dass vom Unterdruckerzeuger erzeugter Unterdruck durch den Saugabschnitt in die von der Schneidkante begrenzte Saugöffnung wirkt. Der Unterdruckerzeuger kann unmittelbar angrenzend an den Saugabschnitt angeordnet sein oder mittels einer starren oder flexiblen Leitung mit dem Saugabschnitt verbunden sein. Die Haltevorrichtung ist an das Halten von Lebensmitteln bei geringem Eindringen in Lebensmittel eingerichtet, insbesondere, wenn der bevorzugte Unterdruckerzeuger angeschlossen ist, da dieser kontinuierlich zu betreiben ist und Leckströme entlang der Schneidkante ausgleicht.

Die Haltevorrichtung zeichnet sich dadurch aus, dass die Schneidkante zumindest abschnittsweise, vorzugsweise vollständig und unterbrechungsfrei, mit einem motorischen Antrieb verbunden ist, z.B. mit einem linearen oder rotierenden Antrieb oder mit einer Vibrationseinrichtung verbunden ist. Der motorische Antrieb ist eingerichtet, die Schneidkante zumindest abschnittsweise zu bewegen, insbesondere mit Schwingungen zu beaufschlagen. Der motorische Antrieb kann eingerichtet sein, Abschnitte der Schneidkante gegeneinander und/oder gegen die Haltevorrichtung zu bewegen, oder die Haltevorrichtung einschließlich der Schneidkante gegenüber einer Halterung oder gegenüber einem Träger zu bewegen, der z.B. Teil eines unbeweglich mit der Haltevorrichtung verbundenen Unterdruckerzeugers ist. Bevorzugt ist der motorische Antrieb eine Vibrationseinrichtung und die Schneidkante, optional einschließlich eines angrenzenden Bereichs des Leitungsabschnitts, vorzugsweise einschließlich eines an diesen angrenzenden Rohrabschnitts des bevorzugten Unterdruckerzeugers, ist zumindest abschnittsweise, optional vollständig, als Sonotrode ausgebildet. In Ausführungsformen, in denen die Haltevorrichtung Bestandteil eines Unterdruckerzeugers ist, z.B. der Leitungsabschnitt schwingungsfest mit dem Unterdruckerzeuger verbunden ist, kann der motorische Antrieb, der insbesondere eine Vibrationseinrichtung ist, mit dem Unterdruckerzeuger verbunden sein und auf den Unterdruckerzeuger wirken, so dass der Unterdruckerzeuger die Bewegungen bzw. Schwingungen durch die Haltevorrichtung auf die Schneidkante überträgt.

Der Antrieb der Vibrationseinrichtung ist vorzugsweise zur Erzeugung von Ultraschallschwingungen in der Vibrationseinrichtung eingerichtet, z.B. ist der Antrieb ein Ultraschallgenerator. Der Antrieb der Vibrationseinrichtung kann mit der Schneidkante gekoppelt sein und/oder mit dem Rohrabschnitt, der einen Saugabschnitt bildet. Die Vibrationseinrichtung kann direkt mit dem Antrieb verbunden sein oder mittels einer Kupplung, die starr oder flexibel sein kann, die z.B. mechanische oder elektrische Energie vom Antrieb zur Vibrationseinrichtung überträgt, und insbesondere ein Konverter und/oder Transformationsstück sein kann. Vorzugsweise ist der Antrieb eingerichtet, die Vibrationseinrichtung in Schwingungen von zumindest 1, bevorzugter von zumindest 5 Hz, insbesondere von 20 bis 150 kHz, oder bis 100 kHz, bevorzugter von 20 bis 40 kHz zu versetzen.

Die Beaufschlagung der Schneidkante mit Schwingungen erlaubt ein Eindringen der Schneidkante in das Lebensmittel auch bei Lebensmitteln mit harten Oberflächen oder harten Bereichen, ohne dass hoher Druck auf das Lebensmittel ausgeübt wird und erzeugt eine für das Ansaugen ausreichende Dichtung des Saugabschnitts.

Bevorzugt weist die Haltevorrichtung einen Näherungsschalter auf, der eingerichtet ist, das Anlegen des Unterdrucks zu steuern und z.B. einen Unterdruckerzeuger oder ein Ventil zwischen Unterdruckerzeuger und Haltevorrichtung ansteuert. In einer Ausführungsform weist der Näherungsschalter einen optischen Sensor auf oder ein beweglich an der Haltevorrichtung gelagertes Element, das durch Annäherung des Lebensmittels aus seiner unbelasteten Stellung bewegt wird. Ein solches beweglich gelagertes Element kann z.B. ein federbelastetes Element sein. Optional weist der Näherungsschalter ein mit Druckluft beaufschlagtes Röhrchen auf, das mit einem Ventil oder einem druckempfindlichen Schalter verbunden ist, wobei das Ventil oder der Schalter mit dem Unterdruckerzeuger verbunden ist und dessen Signal den Unterdruckerzeuger schaltet. Ein solcher Drucksensor kann auch als pneumatisch wirkender Drucksensor bezeichnet werden. Bei Blockieren des Röhrchens beim Anliegen an ein Lebensmittel wird durch die Druckerhöhung im Röhrchen das Ventil bzw. der Schalter geschaltet und in der Folge wird der Unterdruckerzeuger angeschaltet.

Der Näherungsschalter kann optional auch zur Steuerung des Antriebs der Vibrationseinrichtung eingerichtet sein, z.B. bei Annäherung an das zu haltende Lebensmittel den Antrieb für eine vorbestimmte Zeit oder bis zum Erreichen einer vorbestimmten Eindringtiefe der Schneidkante aktivieren, z.B. bis ein optionaler zweiter Näherungsschalter ein Signal für die Annäherung des Lebensmittels entsprechend der vorbestimmten Eindringtiefe gibt. In dieser Ausführungsform weist die Haltevorrichtung z.B. einen Näherungsschalter auf, der eingerichtet ist, in einer ersten Näherungsstellung des Lebensmittels ein Signal zur Aktivierung der Vibrationseinrichtung zu erzeugen und in einer zweiten Näherungsstellung das Signal zur Aktivierung der Vibrationseinrichtung zu beenden oder ein Signal zur Deaktivierung der Vibrationseinrichtung zu erzeugen. Alternativ kann ein zweiter Näherungsschalter vorgesehen sein, der das von einem ersten Näherungsschalter erzeugte Signal zur Aktivierung der Vibrationseinrichtung deaktiviert bzw. ein Signal zur Deaktivierung der Vibrationseinrichtung erzeugt.

Zur Kontrolle der Eindringtiefe kann die Haltevorrichtung auf ihrer Außen- und/oder Innenseite zumindest einen Anschlag aufweisen, der über Wand des Leitungsabschnitts ragt. Bevorzugt ist der Anschlag einstellbar, insbesondere unter der Kontrolle eines Signals eines Drucksensors, das den Unterdruck innerhalb der Haltvorrichtung anzeigt, geregelt einstellbar, z.B. unter der Kontrolle des Signals eines Näherungsschalters. Ein einstellbarer Anschlag ist vorzugsweise senkrecht zur Ansaugöffnung entlang des Leitungsabschnitts geführt verschieblich und kann z.B. eine gesteuerte motorische Einstellung aufweisen.

Der Unterdruckerzeuger kann eine Vakuumpumpe sein. Vorzugsweise ist der Unterdruckerzeuger mittels einer Druckluftquelle antreibbar.

Der bevorzugte Unterdruckerzeuger weist in einem Gehäuse einen Zentralkanal auf, der vorzugsweise entlang der Längsmittelachse des Gehäuses angeordnet ist. Der Zentralkanal weist eine erste Öffnung auf, die von einer konvexen Fläche um den Zentralkanal aufgespannt wird. Die konvexe Fläche erstreckt sich vorzugsweise rotationssymmetrisch um die Längsachse des Zentralkanals und weist besonders bevorzugt eine zum Radius der Längsmittelachse des Zentralkanals parabelförmige Krümmung auf, deren Steigung in Richtung auf die Längsmittelachse des Zentralkanals zunimmt, d.h. deren Steigung mit abnehmendem Radius größer wird, um eine zur Längsmittelachse zunehmende Krümmung zu bilden. Der Zentralkanal weist im Anschluss an die konvexe Fläche seinen kleinsten Querschnitt auf und weitet sich ab diesem kleinsten Querschnitt in Richtung auf seine zweite Öffnung auf, die der ersten Öffnung gegenüber liegt, vorzugsweise mit konisch zunehmendem Querschnitt.

Die erste Öffnung des Zentralkanals wird von einer ringförmigen Auslassöffnung eines Eintrittskanals begrenzt. Dabei ist die ringförmige Auslassöffnung durch eine von der konvexen Fläche beabstandete Schulter gebildet, sodass der Querschnitt der Auslassöffnung in einem an die erste Öffnung angrenzenden Abschnitt angeordnet ist, vorzugsweise um einen axialen Abschnitt der Längsachse des Zentralkanals beabstandet ist. Die Schulter ist vorzugsweise ringförmig, sodass sie mit der beabstandeten konvexen Fläche, die die erste Öffnung aufspannt, eine ringförmige Auslassöffnung um die Längsachse des Zentralkanals bildet. Die Schulter wird z.B. von einem Rohrabschnitt gebildet. Der an der ersten Öffnung gebildete Unterdruck wirkt in den Rohrabschnitt.

Der Saugabschnitt bzw. der Rohrabschnitt ist gegenüber der ersten Öffnung und um die ringförmige Auslassöffnung beabstandet mit dem Unterdruckerzeuger verbunden. Optional kann der Saugabschnitt angrenzend an die erste Öffnung bzw. angrenzend an die Schulter eine starre oder flexible Leitung aufweisen, durch die der Unterdruck wirkt und die die Schneidkante beabstandet, z.B. um insgesamt 20cm bis 5m oder mehr, z.B. um die Haltevorrichtung selbst klein zu halten und um die vom Unterdruckerzeuger ausgehenden Geräusche von der Haltevorrichtung fern zu halten. Bevorzugt grenzt der Leitungsabschnitt an den Rohrabschnitt an und ist mit diesem starr verbunden; bevorzugt ist der Leitungsabschnitt einstückig mit dem Rohrabschnitt ausgebildet.

Generell weist die Ansaugöffnung vorzugsweise einen offenen Querschnitt auf, wobei der Querschnitt des von dem Rohrabschnitt oder Leitungsabschnitt gebildeten Saugabschnitts von Stegen oder einem Gitter überspannt sein kann, die das Eindringen angesaugter Gegenstände, insbesondere von Lebensmittelbestandteilen vermindern. Vorzugsweise weist ein Gitter, das den Saugabschnitt, vorzugsweise in einem Abstand zur Ansaugöffnung, überspannt, Gitteröffnungen mit einem Querschnitt auf, der gleich oder kleiner ist als der Querschnitt des Zentralkanals an dessen Abschnitt kleinsten Querschnitts. In dieser Ausführung werden nur Bestandteile durch das Gitter angesaugt, die auch durch den Abschnitt kleinsten Querschnitts des Zentralkanals treten können, so dass Verstopfungen des Zentralkanals vermieden werden. Gitter oder Stege können in einem Abstand zur Ansaugöffnung innerhalb des Rohrabschnitts angeordnet sein, z.B. zu 10% bis 80% oder bis 50% der Entfernung zwischen Ansaugöffnung und erster Öffnung von der Ansaugöffnung beabstandet.

Stege oder Gitter, die die Ansaugöffnung bzw. den Saugabschnitt überspannen, können Durchlassöffnungen aufweisen, die kleiner als das zu haltende Lebensmittel sind, da dieser Unterdruckerzeuger generell eingerichtet ist, bei Druckluftzufuhr das Lebensmittel gegen die Ansaugöffnung anzusaugen und bei Unterbrechung der Druckluftzufuhr das Lebensmittel, z.B. unter Schwerkrafteinfluss, von der Ansaugöffnung abfallen zu lassen. Entsprechend weist dieser Unterdruckerzeuger vorzugsweise ein Ventil auf, das eingerichtet ist, periodisch für die Druckluftzufuhr zur ringförmigen Auslassöffnung zu öffnen, so dass dann das Lebensmittel gegen die Schneidkanten angesaugt wird, und entsprechend die Druckluftzufuhr zu unterbrechen, um das Lebensmittel fallen zu lassen.

Die zweite Öffnung des Zentralkanals ist mit einer Austrittsöffnung verbunden, aus der die durch die ringförmige Auslassöffnung einströmende Druckluft in Mischung mit durch die Ansaugöffnung angesaugter Luft und angesaugten festen und/oder flüssigen Bestandteilen austritt. Denn die die erste Öffnung aufspannende konvexe Fläche erzeugt bei Beaufschlagung der ringförmigen Auslassöffnung mit Druckluft einen Unterdruck, der in den Saugabschnitt wirkt, wobei die aus der ringförmigen Auslassöffnung austretende Druckluft entlang der konvexen Fläche in den Zentralkanal strömt und durch dessen gegenüberliegende zweite Öffnung austritt.

Optional kann die zweite Öffnung des Zentralkanals zumindest teilweise, insbesondere vollständig verschließbar sein, z.B. mittels eines Ventils, das an der zweiten Öffnung oder an dem an die zweite Öffnung anschließenden Austrittskanal angeordnet ist. Das Ventil kann unmittelbar an der zweiten Öffnung angeordnet sein oder an einer Leitung, die an der zweiten Öffnung des Zentralrohrs angeschlossen ist und den Austrittskanal bildet. Der Schritt des Verschließens der zweiten Öffnung führt in einem Verfahren mit der Haltevorrichtung dazu, dass ein an der Ansaugöffnung angesaugtes Lebensmittel von den Schneidkanten weg abgestoßen bzw. abgeblasen wird. Denn das Verschließen der zweiten Öffnung verhindert das Ausströmen der mit angesaugter Luft vermischten Druckluft durch den Zentralkanal und erzeugt in dem Rohrabschnitt einen Überdruck, der durch den Leitungsabschnitt und die Ansaugöffnung austritt.

Bevorzugt wird die Austrittsöffnung dadurch gebildet, dass die zweite Öffnung des Zentralkanals mit einem Austrittskanal verbunden ist, der in der Austrittsöffnung mündet. Die Austrittsöffnung weist vorzugsweise einen Querschnitt auf, der in Richtung auf die Ebene gerichtet ist, in der die Ansaugöffnung angeordnet ist, und vorzugsweise parallel zum Querschnitt der Saugöffnung liegt, sodass aus der Austrittsöffnung austretende feste oder flüssige Bestandteile in Richtung auf das an der Ansaugöffnung angeordnete Lebensmittel austreten.

In einer Ausführungsform wird der Austrittskanal von einem Abschnitt des Gehäuses gebildet, der in einem Abstand um die Oberfläche der Leitung angeordnet ist, die dem Eintrittskanal gegenüber liegt. Auf diese Weise können Eintrittskanal und Austrittskanal koaxial zum Zentralkanal angeordnet sein und durch eine Leitung voneinander getrennt sein, die zwischen Gehäuse und Außenwandung des Zentralkanals angeordnet ist.

Bevorzugt wird der Austrittskanal von der Innenwand eines Gehäuses und dem Rohrabschnitt gebildet, der den Saugabschnitt bildet und eine Schulter aufweist, die mit der beabstandeten konvexen Fläche an der ersten Öffnung des Zentralkanals die ringförmige Auslassöffnung begrenzt. Das Gehäuse umfasst das Zentralrohr, das den Zentralkanal bildet, so dass die Oberfläche des Zentralrohrs, die gegenüber dem Zentralkanal liegt, mit der Innenwand des Gehäuses und einem Teil des Rohrabschnitts den Austrittskanal bildet. Vorzugsweise weist das Gehäuse einen Druckluftanschluss und den anschließenden Eintrittskanal auf, der Druckluft zur ringförmigen Auslassöffnung leitet. Der Eintrittskanal ist vorzugsweise in einem Abschnitt als Rohr oder Schlauch ausgebildet und weist einen um die ringförmige Auslassöffnung angeordneten Ringkanalabschnitt auf, der bevorzugt koaxial zur ringförmigen Auslassöffnung ist. Der Ringkanalabschnitt hat vorzugsweise einen rotationssymmetrisch um die ringförmige Auslassöffnung angeordneten konstanten Querschnitt. Der als Rohr oder Schlauch ausgebildete Abschnitt des Eintrittskanals kann außerhalb des Gehäuses angebracht sein, oder vorzugsweise innerhalb des Gehäuses verlaufen. Besonders bevorzugt verläuft der Eintrittskanal innerhalb zumindest einer Haltestange, die den Rohrabschnitt mit dem Gehäuse verbindet und z.B. an einem Gehäuseabschnitt befestigt ist, der gegenüber der Ansaugöffnung, z.B. am zweiten Ende, angeordnet ist.

Bevorzugt ist der Gehäuseabschnitt gegenüber der Ansaugöffnung oder gegenüber der ersten Öffnung als Trägerplatte ausgebildet, die eine Befestigungseinrichtung zur Befestigung der Haltevorrichtung an einem Maschinen- oder Roboterarm aufweist, der z.B. Bestandteil eines Slicers ist, wobei die Befestigungseinrichtung optional den Druckluftanschluss trägt. Entsprechend weist bevorzugt das Gehäuse gegenüber der Ansaugöffnung oder in einem Abstand zur Ansaugöffnung eine Trägerplatte auf, die mittels zumindest eines Trägers mit dem Rohrabschnitt verbunden ist. In dieser Ausführungsform ist bevorzugt, dass das Gehäuse von der zweiten Öffnung des Zentralrohrs beabstandet ist, insbesondere dadurch, dass die Trägerplatte in einem Abstand von der zweiten Öffnung angeordnet ist, so dass das Volumen zwischen der Innenwand des Gehäuses und dem Zentralrohr den Austrittskanal bildet, so dass z.B. durch die Vergrößerung des Querschnitts vom Zentralkanal zum Austrittskanal eine Reduktion der Strömungsgeschwindigkeit und/oder eine Reduktion der Geräuschentwicklung an der Austrittsöffnung erreicht wird.

Weiter bevorzugt ist das Gehäuse gegenüber der zweiten Öffnung des Zentralrohrs, z.B. die Deckelplatte, nach innen konvex ausgebildet, z.B. kalottenförmig, mit parabelförmigem Querschnitt, oder kegelförmig, und bevorzugt zur Längsachse des Zentralrohrs symmetrisch, so dass das Gehäuse bzw. die Deckelplatte in Richtung auf das Zentralrohr ragen. Diese Ausführungsform ist durch die geringere Geräuschentwicklung beim Betrieb vorteilhaft, z.B. im Vergleich mit einem Gehäuse mit zylindrischem Innenquerschnitt.

Der Unterdruckerzeuger dieser Ausführungsform weist eine von einem Leitungsabschnitt, der einen Saugabschnitt bildet, aufgespannte Ansaugöffnung auf, wobei in einem Abstand zur Ansaugöffnung in dem Rohrabschnitt eine um die ringförmige Auslassöffnung vom Saugabschnitt beabstandete konvexe Oberfläche angeordnet ist, die eine erste Öffnung eines in einem Zentralrohr gebildeten Zentralkanals aufspannt, wobei die konvexe Fläche in einem axialen Abschnitt mit dem kleinsten Querschnitt des Zentralkanals mündet, an welchen sich ein Abschnitt des Zentralkanals anschließt, der sich bis zu einer der ersten Öffnung gegenüberliegenden zweiten Öffnung aufweitet, und
die ringförmige Auslassöffnung über einen Eintrittskanal mit einem Druckluftanschluss verbunden ist, wobei das Zentralrohr längs seiner Längsachse verschieblich in einer Ausnehmung des Rohrabschnitts geführt ist, bis eine erste Anlagefläche, die das Zentralrohr auf seiner Außenfläche gegenüber dem Zentralkanal aufweist, an einer dazu parallelen zweiten Anlagefläche des Rohrabschnitts anliegt, wobei vorzugsweise das Zentralrohr von einem Gehäuse umfasst ist.

Die Haltevorrichtung mit einem solchen Unterdruckerzeuger ist dadurch leicht zu reinigen und ist insbesondere zur Verwendung für die Reinigung in einer automatischen Spülmaschine geeignet, dass das Zentralrohr lösbar an einem von der ersten Öffnung beabstandeten Abschnitt des Rohrabschnitts angeordnet ist. In dieser Ausführungsform kann das Zentralrohr auf seiner gegenüber dem Zentralkanal angeordneten Oberfläche eine erste Anlagefläche aufweisen, die sich zumindest anteilig, vorzugsweise umfänglich geschlossen um das Zentralrohr erstreckt. Das Zentralrohr ist dadurch lösbar am Rohrabschnitt angeordnet, dass die erste Anlagefläche des Zentralrohrs gegen eine zweite Anlagefläche, die am Rohrabschnitt angeordnet ist, lösbar anstößt, optional mit der zweiten Anlagefläche verrastbar ist und insbesondere nur gegen die zweite Anlagefläche anliegt und durch die Schwerkraft und/oder die bei Zutritt von Druckluft erzeugte Kraft gegen die zweite Anlagefläche belastet ist. In dieser Ausführungsform kann das Zentralrohr durch Entrasten bzw. durch Bewegen ohne Lösen einer Verbindung bzw. einer zusätzlichen Befestigung von der zweiten Anlagefläche entfernt werden, so dass für eine Reinigung das Zentralrohr vom Rohrabschnitt und den an diesem angeordneten Elementen einfach getrennt werden kann.

Bevorzugt ist die zweite Anlagefläche zumindest abschnittsweise, bevorzugter vollständig parallel zur ersten Anlagefläche, um bei Anordnung gegeneinander eine hinreichende Dichtung zwischen dem Eintrittskanal und dem Zentralkanal zu bilden. Vorzugsweise ist die erste Anlagefläche in einem axialen Abschnitt zwischen der von der konvexen Fläche aufgespannten ersten Öffnung und der gegenüberliegenden zweiten Öffnung des Zentralrohrs angeordnet und die zweite Anlagefläche ist in dem Abstand zur Schulter des Rohrabschnitts angeordnet, der gleich dem Abstand der ersten Anlagefläche zur ersten Öffnung plus der axialen Erstreckung der ringförmigen Auslassöffnung ist. Weiter bevorzugt erstrecken sich erste und zweite Anlagefläche radial zur Längsmittelachse des Zentralrohrs.

Bevorzugt ist die zweite Anlagefläche an einem Stutzen des Rohrabschnitts angeordnet, der gegenüber dem Saugabschnitt bzw. gegenüber der Ansaugöffnung liegt. Der Stutzen umfasst bevorzugt einen Anteil des Eintrittskanals und bildet mit der ringförmigen Schulter des Rohrabschnitts den Ringkanalabschnitt, der sich um die ringförmige Auslassöffnung erstreckt. Optional weist ein Stutzen Ausnehmungen in dem an ein Gehäuse angrenzenden Abschnitt auf. Das Gehäuse kann mit dem Stutzen verbunden sein, z.B. mittels Eingriffs von Stutzen und einem an die Austrittsöffnung angrenzenden Abschnitt des Gehäuses. Bevorzugt weist das Gehäuse eine Trägerplatte auf, die mittels zumindest eines Trägers, der sich vorzugsweise parallel zum Zentralrohr erstreckt, mit dem Stutzen verbunden. Besonders bevorzugt sind zumindest 2, bevorzugter 3 Träger zwischen Trägerplatte und Stutzen angeordnet, von denen zumindest ein Träger einen rohrförmigen Abschnitt des Eintrittskanals bildet. Optional kann der Unterdruckerzeuger genau einen Träger aufweisen, der zwischen Trägerplatte und Stutzen angeordnet ist und einen rohrförmigen Abschnitt des Eintrittskanals bildet.

Optional ist ein Stellglied am Zentralrohr angeordnet, mit dem das Zentralrohr gegenüber der Schulter des Rohrabschnitts bewegt werden kann, insbesondere parallel zur Längsachse des Zentralrohrs bewegt werden kann. Ein solches Stellglied kann das vollständige Zentralrohr gegenüber der ersten Öffnung bewegen, oder einen Abschnitt des Zentralrohrs gegenüber der ersten Öffnung bewegen, z.B. wenn das Stellglied zwei Abschnitte des Zentralrohrs gegeneinander bewegt. Der dem zweiten Ende zugewandte Abschnitt eines in zwei Abschnitte geteilten Zentralrohrs ist dabei vorzugsweise am Gehäuse fixiert. Mittels eines solchen Stellglieds kann der Abstand der ersten Öffnung bzw. der konvexen Fläche des Zentralrohrs zur Schulter des Rohrabschnitts eingestellt werden, so dass die ringförmige Auslassöffnung durch das Stellglied einstellbar ist, und damit die Stärke des Unterdrucks, der, insbesondere bei gleichem Druck der Druckluft, durch die in die ringförmige Auslassöffnung einströmende Druckluft erzeugt wird. Überdies dient ein solches Stellglied der Steuerung der Luftmenge, die durch den Zentralkanal strömt, so dass z.B. in der Ausführungsform mit einem Ventil, das die zweite Öffnung des Zentralkanal verschließt, die bei geschlossenem Zentralkanal aus der Ansaugöffnung tretende Luftmenge gesteuert wird. Ein solches Stellglied, das den Querschnitt bzw. die Größe der ringförmigen Auslassöffnung einstellt, kann z.B. zwischen der ersten und zweiten Anlagefläche angeordnet sein oder zwischen dem Zentralrohr und dem Gehäuse. Das Stellglied kann z.B. ein Piezoelement aufweisen und zwischen erster und zweiter Anlagefläche angeordnet sein. Alternativ kann das Stellglied zwei Abschnitte des Zentralrohrs längs der Mittelachse des Zentralrohrs gegeneinander bewegen, die z.B. gegeneinander veschieblich sind oder mittels eines Gewindes miteinander in Eingriff stehen.

Optional kann das Stellglied durch einen Drucksensor gesteuert sein, der im Saugabschnitt des Rohrabschnitts angeordnet ist, so dass sich im Verfahren eine Regelung des Unterdrucks an der Ansaugöffnung ergibt. Entsprechend weist der Unterdruckerzeuger in einer bevorzugten Ausführungsform einen im Saugabschnitt angeordneten Drucksensor auf, der das Stellglied steuert, z.B. um im Verfahren einen vorgegebenen Unterdruck an der Ansaugöffnung einzuregeln.

Optional steht das Zentralrohr mit dem Rohrabschnitt in Eingriff, wenn die erste gegen die zweite Anlagefläche angeordnet ist, z.B. in Eingriff mittels Gewinde oder mittels Bajonettverschlusses. In dieser Ausführungsform kann das Stellglied eine Stellschraube und/oder einen Stellmotor aufweisen und zwischen Rohrabschnitt und Zentralrohr angeordnet sein, wobei das Zentralrohr mit einem Gewinde des Rohrabschnitts drehbar in Eingriff steht.

In dieser Ausführungsform kann das Zentralrohr optional ausschließlich durch Anordnung seiner ersten Anlagefläche gegen die am Rohrabschnitt angeordnete zweite Anlagefläche positionsgenau am Rohrabschnitt angeordnet sein, bevorzugt in Kombination mit der Führung des Zentralrohrs längs seiner Längsachse in dem Rohrabschnitt, um mit der ersten Öffnung die ringförmige Auslassöffnung zu bilden, da beim Betrieb die durch die ringförmige Auslassöffnung strömende Druckluft einen Unterdruck erzeugt, der die konvexe Fläche des Zentralrohrs gegen die Anlagefläche belastet. Wenn die erste Anlagefläche von einem z.B. ringförmigen Ansatz um das Zentralrohr gebildet wird, kann der innerhalb des Gehäuses erzeugte Überdruck den Ansatz des Zentralrohrs gegen die zweite Anlagefläche belasten und halten. Entsprechend kann der Unterdruckerzeuger dieser Ausführungsform ohne stoffschlüssige oder klemmende Verbindung bzw. Schraubverbindung zwischen dem Zentralrohr und dem Rohrabschnitt ausgebildet sein.

In einer Ausführungsform kann der Unterdruckerzeuger einen Rohrabschnitt mit einer vorzugsweise kreisförmigen Schulter und eine in einem Abstand zu der Schulter angeordnete zweite Anlagefläche und einen zwischen der Schulter und der zweiten Anlagefläche angeordneten Ringkanalabschnitt, der mit einem Eintrittskanal verbunden ist, sowie ein Zentralrohr mit einer ersten Öffnung, die von einer konvexen ringförmigen Fläche eingefasst ist, einer gegenüberliegenden zweiten Öffnung und einer ersten Anlagefläche, die parallel zur zweiten Anlagefläche ausgebildet ist, gegen die zweite Anlagefläche angeordnet ist und zwischen erster und zweiter Öffnung am Zentralrohr angeordnet ist, aufweisen oder daraus bestehen, wobei bevorzugt eine Austrittsöffnung dadurch gebildet ist, dass die zweite Öffnung des Zentralkanals mit dem Austrittskanal verbunden ist, der insbesondere von der Innenwand des Gehäuses und der Außenoberfläche des Zentralrohrs gebildet ist, wobei der Austrittskanal in eine Austrittsöffnung mündet, die in Richtung auf die Ebene angeordnet ist, in der die Ansaugöffnung aufgespannt ist.

Generell kann die Austrittsöffnung in Alternative zu der Öffnung zwischen Gehäuse und dem Rohrabschnitt, der mit dem die Ansaugöffnung bildenden Leitungsabschnitt verbunden ist, von einem Ende einer Leitung gebildet sein, die an der zweiten Öffnung des Zentralrohrs angeschlossen ist. Diese alternative Ausführungsform erlaubt die Ableitung der Abluft, die aus der zweiten Öffnung des Zentralrohrs austritt, in eine größere Entfernung von dem Gehäuse. Diese Ausführungsform ist dahingehend vorteilhaft, dass die Geräuschentwicklung beim Betrieb am Gehäuse selbst geringer ist.

Vorzugsweise wird der Eintrittskanal, der in der ringförmigen Auslassöffnung mündet, von der Außenwandung des Zentralkanals und einer zu dieser beabstandeten Leitung, die vorzugsweise zylindrisch ist, gebildet. Der Eintrittskanal ist mit einer Zuleitung mit einem Druckluftanschluss verbunden, an den eine Druckluftquelle anschließbar ist.

Bei Verwendung der erfindungsgemäßen Vorrichtung mit diesem Unterdruckerzeuger in einem Verfahren zum Transport bzw. Anheben von Gegenständen, die insbesondere Lebensmittel sind, wird der Druckluftanschluss mit Druckluft beaufschlagt, die durch den Eintrittskanal strömt und durch die ringförmige Auslassöffnung etwa senkrecht zur Längsachse des Zentralkanals strömt. Auf diese Weise wird die konvexe Oberfläche, die sich radial um die Längsachse des Zentralkanals erstreckt, von radial zur Längsachse des Zentralkanals strömender Druckluft angeströmt. Im Zusammenwirken mit dem sich vergrößernden Durchmesser des Zentralkanals in dem Abschnitt, der sich an dessen Abschnitt mit geringstem Querschnitt angrenzend an die konvexe Fläche anschließt, wird ein Unterdruck erzeugt, der durch den Saugabschnitt und den Rohrabschnitt in den Leitungsabschnitt und in die von diesem aufgespannte Ansaugöffnung wirkt. Die Ansaugöffnung ist von der Schneidkante eingefasst, die am Rohrabschnitt angebracht ist. Durch Anordnung eines Lebensmittels über die Ansaugöffnung, bzw. an die Schneidkante, saugt die Haltevorrichtung das Lebensmittel gegen die Schneidkante.

Ein Vorteil der erfindungsgemäßen Halteeinrichtung liegt darin, dass damit auch Lebensmittel mit zumindest abschnittsweise harter Oberfläche gehalten werden können, in die Schneidkanten nicht ohne Bewegung, die insbesondere eine Schwingung ist, eindringen können, und die Vorrichtung nur mit einem kurzen Abschnitt des Lebensmittels in Eingriff tritt, so dass z.B. in einem Slicer oder einer anderen Schneideinrichtung nur ein kurzer Abschnitt des Lebensmittels nicht geschnitten werden kann.

Die durch die ringförmige Auslassöffnung des bevorzugten Unterdruckerzeugers austretende Druckluft tritt in Mischung mit der Luft und festen bzw. flüssigen Bestandteilen, die durch die Ansaugöffnung eintreten, durch die erste Öffnung, durch den Zentralkanal und nach Durchströmen des Austrittskanal aus der Austrittsöffnung. Da der Zentralkanal in seinem Abschnitt, der an die konvexe Fläche gegenüber der ersten Öffnung angrenzt, seinen geringsten Querschnitt aufweist, können angesaugte Bestandteile, die durch diesen geringsten Querschnitt des Zentralkanals hindurchtreten, durch die Strömung längs des Zentralkanals durch dessen zweite Öffnung austreten, und anschließend durch den Austrittskanal und die Austrittsöffnung austreten, ohne von einem Unterdruckerzeuger wie einer Vakuumpumpe angesaugt zu werden. Auf diese Weise werden durch die besondere Strömungsführung des bevorzugten Unterdruckerzeugers mögliche Verschmutzungen außerhalb der Haltevorrichtung vermieden. Bei Anordnung der Austrittsöffnung in Richtung auf die Ebene, in der die Ansaugöffnung angeordnet ist, können mit dem bevorzugten Unterdruckerzeuger vom angesaugten Gegenstand gelöste feste oder flüssige Bestandteile wieder auf den angesaugten Gegenstand zurückübertragen werden. Alternativ kann die Austrittsöffnung eine Leitung oder einen Schlauch aufweisen, optional mit angeschlossenem Filter oder Zyklon zur Abscheidung von festen oder flüssigen Bestandteilen von austretender Luft.

Der Zentralkanal des bevorzugten Unterdruckerzeugers wird mit einem Zentralrohr gebildet, an dessen erstem Ende die erste Öffnung des Zentralkanals angeordnet ist, und dessen gegenüberliegendes zweites Ende die zweite Öffnung aufweist. Die dem Zentralkanal gegenüberliegende Außenwandung des Zentralrohrs bildet in der bevorzugten Ausführungsform gemeinsam mit einer das Zentralrohr umfassenden Leitung, die vorzugsweise zylindrisch ist, den Eintrittskanal für Druckluft.

In einer optionalen Ausführungsform des bevorzugten Unterdruckerzeugers besteht das Zentralrohr aus zumindest zwei Abschnitten, von denen ein erster Abschnitt den Bereich des Zentralkanals von dessen erster Öffnung bis zumindest in den geringsten Querschnitt des Kanals, bevorzugter bis in einen Bereich des sich konisch aufweitenden Zentralkanals umfasst und einem angrenzenden zweiten Abschnitt, der den Zentralkanal fortsetzt, beispielsweise dessen sich konisch aufweitenden Abschnitt, und die zweite Öffnung umfasst, oder in der zweiten Öffnung endet. Besonders bevorzugt sind der erste und der zweite Abschnitt des Zentralrohrs gegeneinander entlang der Längsachse des Zentralkanals verschieblich, beispielsweise indem sie mit mittels Gewindeeingriffs gegeneinander längs der Längsachse des Zentralkanals beweglich sind.

Vorzugsweise umfasst das Gehäuse das zumindest abschnittsweise koaxial in der zylindrischen Leitung angeordnete Zentralrohr mit Abstand, durch welchen der Austrittskanal zwischen der Leitung und dem Gehäuse gebildet wird.

Optional weist die Halteeinrichtung eine Abstoßeinrichtung auf, z.B. einen mechanisch beweglichen Stößel oder ein mit Druckluft beaufschlagbares Röhrchen innerhalb oder außerhalb des Rohrabschnitts auf. Eine solche Ausstoßeinrichtung kann alternativ oder zusätzlich zu einem Ventil vorhanden sein, das die zweite Öffnung des bevorzugten Unterdruckerzeugers verschließt.

### Genaue Beschreibung der Erfindung

Die Erfindung wird nun genauer mit Bezug auf die Figuren beschrieben, die schematisch
- in Figur 1 eine Ausführungsform der Vorrichtung im Schnitt,
- in Figur 2 eine bevorzugte Ausführungsform der Vorrichtung im Schnitt,
- in Figur 3 die Ausführungsform von Figur 2 mit der Schnittebene vor dem Zentralrohr,
- in Figur 4 eine Ausführungsform der Vorrichtung,
- in Figur 5 eine Ausführungsform der Haltevorrichtung im Schnitt und
- in Figur 6 optionale Ausführungen der im Schnitt gezeigten Haltevorrichtung zeigen.

In den Figuren bezeichnen die Bezugsziffern funktionsgleiche Elemente. Die in den Figuren beschriebenen Einzelheiten sind erfindungsgemäß kombinierbar, auch wenn sie mit Bezug auf verschiedene Figuren beschrieben sind.

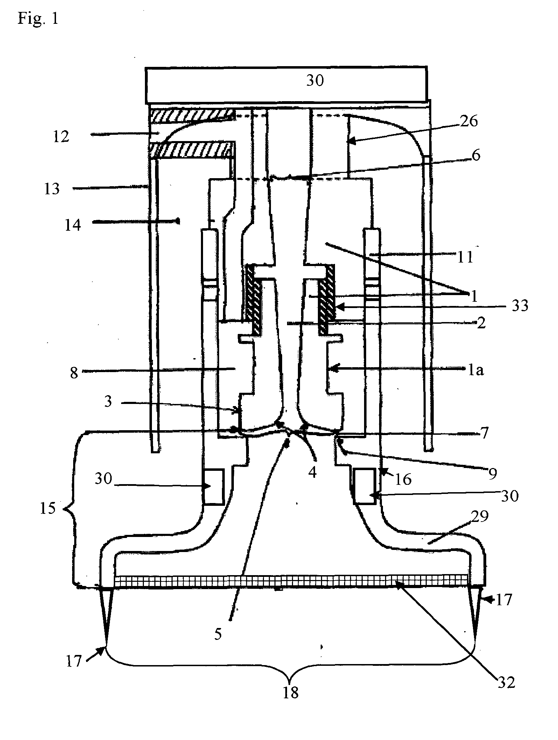

Die Figuren 1 bis 4 zeigen die Haltevorrichtung mit der bevorzugten Ausführungsform des Unterdruckerzeugers, an dessen Rohrabschnitt 16 der Leitungsabschnitt 29 angrenzt.

Wie in Figur 1 gezeigt ist, weist der Unterdruckerzeuger ein Zentralrohr 1 auf, in dem ein Zentralkanal 2 angeordnet ist, vorzugsweise koaxial zum Zentralrohr 1. Am ersten Ende 3 des Zentralkanals 2 spannt eine konvexe Fläche 4 des Zentralkanals 2 die erste Öffnung 5 des Zentralkanals 2 auf. Die konvexe Fläche 4 erstreckt sich vom kleinsten Querschnitt des Zentralkanals 2 bis in die Ebene, in der die erste Öffnung 5 aufgespannt ist. Vorzugsweise weist die konvexe Fläche 4 einen senkrecht zur Längsmittelachse des Zentralkanals 2 parabelförmigen Querschnitt auf, dessen Steigung von der Ebene, in der die erste Öffnung 5 angeordnet ist, zum Abschnitt des Zentralkanals 2 mit dessen geringstem Querschnitt zunimmt. Gegenüber der Ebene, in der die erste Öffnung 5 aufgespannt ist, erstreckt sich angrenzend an den Bereich des kleinsten Querschnitts des Zentralkanals 2 ein Abschnitt, dessen Querschnitt zur zweiten Öffnung 6 zunimmt, insbesondere sich konisch vom kleinsten Querschnitt des Zentralkanals 2 bis zur zweiten Öffnung 6 aufweitet. Die zweite Öffnung 6 bildet das zweite Ende 10 des Zentralrohrs gegenüber dessen erstem Ende 3. Angrenzend an die erste Öffnung 5 ist eine ringförmige Auslassöffnung 7 angeordnet, an die ein Eintrittskanal 8 für Druckluft angeschlossen ist. Vorzugsweise ist die ringförmige Auslassöffnung 7 etwa senkrecht zur Längsmittelachse des Zentralkanals 2 ausgerichtet, besonders bevorzugt senkrecht zur konvexen Fläche 4, um diese tangential mit austretender Druckluft anzuströmen.

Die ringförmige Auslassöffnung 7 wird von einem von der Zentralachse des Zentralkanals 2 beabstandeten Bereich der konvexen Fläche 4 und einer von dieser beabstandeten Schulter 9 gebildet, die z.B. an den Eintrittskanal 8 grenzt.

Der Eintrittskanal 8 wird von einem Bereich der Außenwandung 1a des Zentralrohrs 1 gebildet und zumindest abschnittsweise von einer Leitung 11, die besonders bevorzugt zylindrisch ist und koaxial zum Zentralkanal 2 angeordnet ist. Ein Druckluftanschluss 12, der am Gehäuse 13 angeordnet ist, ist mittels eines Druckluftkanals mit dem Eintrittskanal 8 verbunden.

An der zweiten Öffnung 6 des Zentralkanals 2 ist ein Austrittskanal 14 angeschlossen, der in einer Austrittsöffnung 19 mündet. Der Austrittskanal 14 wird entsprechend der bevorzugten Ausführungsform abschnittsweise von der Innenwandung des Gehäuses 13 und der Außenwandung der Leitung 11 gebildet. Der Austrittskanal 14 kann von der Innenwandung des Gehäuses 13 gebildet werden, das in einem Abstand um das Zentralrohr 1 angeordnet ist. Die Austrittsöffnung 19 ist entsprechend einer bevorzugten Ausführungsform auf die Ebene gerichtet, in der die Ansaugöffnung 18 aufgespannt ist.

Die Schulter 9 umfasst den Bereich, in dem die erste Öffnung 4 angeordnet ist, bzw. den Bereich des ersten Endes des Zentralrohrs 1, in dem bei Beaufschlagung des Unterdruckerzeugers mit Druckluft an Druckluftanschluss 12 Unterdruck erzeugt wird, der als s Saugabschnitt 15 bezeichnet werden kann. Der Saugabschnitt 15 wird von einem mit dem Rohrabschnitt 16 verbundenen Leitungsabschnitt 29 gebildet, der gegenüber der Schulter 9 in einer Schneidkante 17 mündet, die die Ansaugöffnung 18 aufspannt. Vorzugsweise ist die Ansaugöffnung 18 in einer Ebene aufgespannt, die etwa parallel zur Ebene der ersten Öffnung 5 liegt.

Der Rohrabschnitt 16 mit dem angrenzenden Leitungsabschnitt 29 überspannt den Saugabschnitt 15 von der ringförmig um die ringförmige Auslassöffnung 7 angeordneten Schulter 9 bis zur Ebene, in der die Schneidkante 17 angeordnet ist. Der Rohrabschnitt 16 kann sich entlang des Saugabschnitts 15 zur Ansaugöffnung 18 verjüngen oder aufweiten; vorzugsweise überspannt die Ansaugöffnung 18 einen Querschnitt, der gleich dem oder größer als der Querschnitt des Gehäuses 13 ist. Bevorzugt ist der den Saugabschnitt 15 5 überspannende Rohrabschnitt 16 einstückig mit der Leitung 11 und der Schulter 9 gebildet.

Weiter bevorzugt ist das Zentralrohr 10, bzw. dessen zweiter Abschnitt, mit der Innenoberfläche des Gehäuses 13 verbunden. Optional kann das Zentralrohr 1, bzw. dessen zweiter Abschnitt, einstückig mit dem Gehäuse 13 ausgebildet sein. Die Leitung 11 kann am Zentralrohr 1 oder an dessen zweiten Abschnitt fixiert sein, insbesondere in Ausführungsformen, in denen das Zentralrohr 1 von einem ersten und einem zweiten Abschnitt gebildet wird, und der erste Abschnitt entlang der Längsachse des Zentralkanals 2 zum zweiten Abschnitt des Zentralrohrs 1 verschieblich ist, beispielsweise mittels eines Gewindes, in dem erster und zweiter Abschnitt des Zentralrohrs 1 miteinander in Eingriff stehen. Ein solches Gewinde bildet ein Stellglied 33, mit dem der an die ringförmige Auslassöffnung 7 angrenzende Abschnitt des Zentralrohrs 1 gegen die Schulter 9 verschieblich ist.

Ein optionales Gitter 32, das den Rohrabschnitt 16 überspannt, ist in einem Abstand zur Ansaugöffnung 18 innerhalb des Rohrabschnitts 16 angeordnet.

Die Vibrationseinrichtung weist einen Antrieb 30 auf, der bevorzugt ein Ultraschallgenerator ist. Der Antrieb 30 ist mit der als Sonotrode ausgebildeten Schneidkante 17 gekoppelt und kann z.B. an dem Rohrabschnitt 16 angebracht sein, der die Schwingungen an die Schneidkante 17 überträgt. Bevorzugt ist der Antrieb 30 innerhalb des Leitungsabschnitts 29 angeordnet oder innerhalb des Rohrabschnitts 16, wenn dieser starr mit dem Leitungsabschnitt 29 verbunden ist. Alternativ kann der Antrieb 30 an dem oder innerhalb der Trägerplatte 25 oder an einem Träger 26 angeordnet sein, wenn der Rohrabschnitt 16 starr mit dem Leitungsabschnitt 29 verbunden ist, insbesondere einstückig mit diesem ausgebildet ist. Entsprechend der generell bevorzugten Ausführung ist die Schneidkante 17 umfänglich geschlossen und umfasst die Ansaugöffnung 18 vollumfänglich.

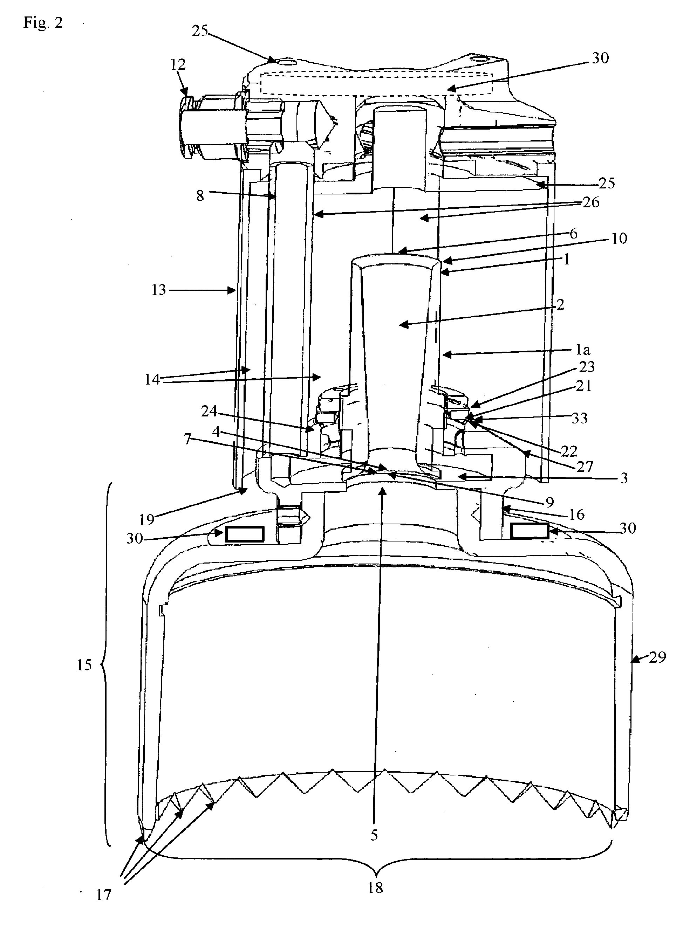

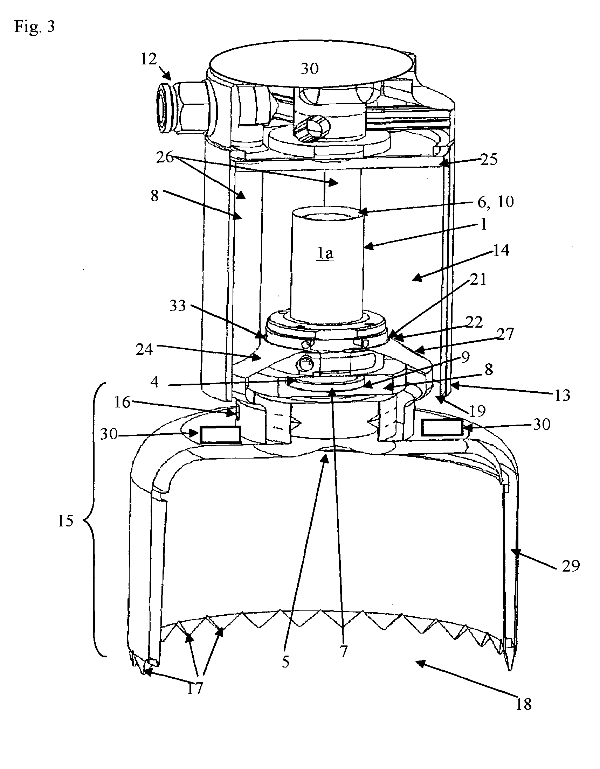

In Figuren 2 und 3 ist die Schneidkante 17 in einer optionalen Ausführungsform gezeigt, die Zähne aufweist.

In der Ausführungsform von Figur 2 ist der Druckluftanschluss 12 an dem Ende des Gehäuses 13 angebracht, das gegenüber der Ansaugöffnung 18 liegt. Der Druckluftanschluss 12 ist mittels eines rohrförmigen Eintrittskanals 8 gebildet, der sich im Gehäuse 13 von dessen Ende gegenüber der Ansaugöffnung 18 zum Rohrabschnitt 16 erstreckt und weist innerhalb des Rohrabschnitts 16 einen Ringkanalabschnitt 20 auf, der sich um die ringförmige Auslassöffnung 7 erstreckt. Die ringförmige Auslassöffnung 7 wird durch die ringförmige Schulter 9 des Rohrabschnitts 16 und die beabstandete konvexe Fläche 4 der ersten Öffnung 5 des Zentralrohrs 1 gebildet. Das Zentralrohr 1 bildet auf seiner inneren Oberfläche den Zentralkanal 2, der sich von der ersten Öffnung 5 am ersten Ende 3 zur zweiten Öffnung 6 am gegenüberliegenden zweiten Ende 10 erstreckt und zwischen erstem Ende 3 und zweitem Ende 10 einen Abschnitt mit geringstem Querschnitt angrenzend an die konvexe Fläche 4 aufweist und sich zwischen diesem Abschnitt mit geringstem Querschnitt zum zweiten Ende vergrößert. Generell kann, wie auch hier dargestellt ist, der Rohrabschnitt 16 einen größeren Durchmesser als die ringförmige Schulter 9 bzw. als die ringförmige Auslassöffnung 7 aufweisen. Dabei ist bevorzugt, dass der Eintrittskanal 8 einen Ringkanalabschnitt 20 aufweist, der sich über einen Anteil des radialen Abschnitts, vorzugsweise über den gesamten radialen Abschnitt zwischen der ringförmigen Auslassöffnung 7 und dem an die ringförmige Auslassöffnung 7 angrenzenden Durchmesser des Rohrabschnitts 16 erstreckt.

Das Zentralrohr 1 weist auf seiner Außenfläche, die gegenüber dem Zentralkanal 2 liegt, eine erste Anlagefläche 21 auf. Die erste Anlagefläche 21 kann von einer Ausnehmung im Umfang des Zentralrohrs 1 gebildet sein, oder von einem das Zentralrohr 1 überragenden Ansatz 23. Die Ausnehmung bzw. ein das Zentralrohr 1 überragender Ansatz 23 sind vorzugsweise ringförmig und bilden eine ringförmige erste Anlagefläche 21. Die erste Anlagefläche 21 kann sich radial um die Längsachse des Zentralrohrs 1 in einer Ebene erstrecken oder ein Abschnitt einer Kegelfläche sein, die optional gewölbt ist. Die zweite Anlagefläche 22 ist parallel zur ersten Anlagefläche 21, so dass erste und zweite Anlagefläche 21, 22 aufeinanderliegen. Das Zentralrohr 1 ist von einem Abschnitt bzw. Stutzen 24 des Rohrabschnitts 16 umfasst bzw. längsverschieblich geführt, so dass das Zentralrohr 1 in diesen Abschnitt bzw. Stutzen 24 eingeschoben ist, bis seine erste Anlagefläche 21 gegen die zweite Anlagefläche 22 stößt. Optional ist ein Stellglied 33, z.B. ein Piezoelement, zwischen der ersten Anlagefläche 21 und der zweiten Anlagefläche 22 angeordnet. Durch Betätigen des Stellglieds wird das Zentralrohr 1 entlang seiner Längsachse gegenüber dem Rohrabschnitt 16 verschoben, so dass die Höhe der ringförmigen Auslassöffnung 7 zwischen der Schulter 9 und der konvexen Fläche 4 geändert wird. Wegen des großen Einflusses der Höhe der ringförmigen Auslassöffnung 7 auf den mittels der Druckluft erzeugten Unterdruck ist das Stellglied 33 generell zur Einstellung des erzeugten Unterdrucks während des Verfahrens zum Halten oder Transportieren geeignet. Überdies hat das Stellglied 33 zusätzlich zu der Wirkung als Regeleinrichtung für Unterdruck und Luftvolumen den Vorteil, mit der Schulter 9 und Bereich der konvexen Fläche 4 ein Verschlußventil für die Druckluft zu bilden.

Das Gehäuse 13 weist eine Trägerplatte 25 auf, die mittels zumindest eines rohrförmigen Abschnitts des Eintrittskanals 8 mit dem Rohrabschnitt 16 verbunden ist, bevorzugt mit zumindest zwei, bevorzugter mit drei Trägern 26, die sich zwischen Trägerplatte 25 und Rohrabschnitt 16 erstrecken, wobei zumindest ein Träger 26 einen Abschnitts des Eintrittskanals 8 bildet. Da die Trägerplatte 25 in einem Abstand vom zweiten Ende 10 des Zentralrohrs 1 angeordnet ist, bildet die Innenfläche des Gehäuses 13 mit der Außenfläche des Zentralrohrs 1 und den Trägern 26 den Austrittskanal 14, der sich bis zur Austrittsöffnung 19 erstreckt, die zwischen Gehäuse 13 und Rohrabschnitt 16 begrenzt ist.

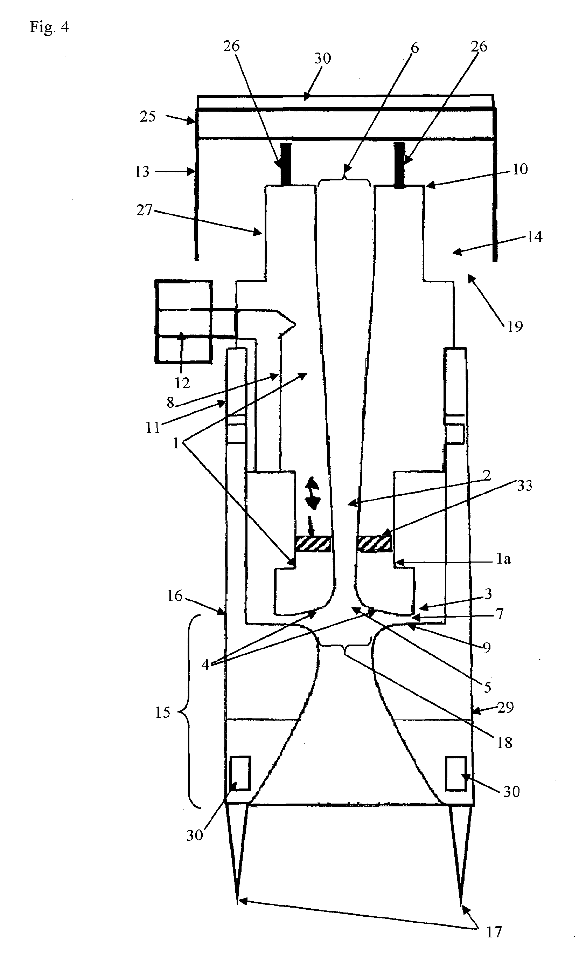

Figur 2 zeigt wie Figur 4 die optionale Anordnung des motorischen Antriebs 30 am bzw. auf dem Gehäuse 13, insbesondere auf oder in der Trägerplatte 25. Dies ist generell bevorzugt, wenn der Antrieb 30 eine Vibrationseinrichtung ist, z.B. ein Ultraschallerzeuger, und der Unterdruckerzeuger starr, z.B. mittels der Träger 26, mit dem Rohrabschnitt 16 und dem daran angrenzenden Leitungsabschnitt 29 verbunden ist. Als Alternative ist der Antrieb 30 auf dem Rohrabschnitt 16 bzw. auf dem mit diesem verbundenen, insbesondere einstückig ausgebildeten Leitungsabschnitt 29 angeordnet. Optional ist der Antrieb ringförmig und/oder innerhalb des Rohrabschnitts 16 und/oder des Leitungsabschnitts 29 angeordnet.

In Figur 3 ist der Schnitt vor dem Zentralrohr 1 gezogen, so dass die Außenfläche des Zentralrohrs 1 sichtbar ist. Wie dargestellt, ist generell bevorzugt, dass in Ausführungsformen, in denen der Austrittskanal 14 in eine in Richtung auf die Ebene der Ansaugöffnung gerichtete Austrittsöffnung 19 mündet, der Rohrabschnitt 16 einen Stutzen 24 mit einer Oberfläche 27 aufweist, die sich von der zweiten Anlagefläche 22 bis an die Austrittsöffnung 19 erstreckt, und insbesondere mit Neigung gegen die Längsachse des Zentralrohrs 1 verläuft.

Figur 4 zeigt einen Unterdruckerzeuger mit Haltevorrichtung 28, bei dem das Zentralrohr 1 zwei gegeneinander längs der gemeinsamen Achse verschiebliche Abschnitte aufweist, die durch ein Stellglied 33 gesteuert gegeneinander beweglich sind. Diese Figur zeigt auch, dass der Antrieb 30 der Vibrationseinrichtung innerhalb des Rohrabschnitts 16 angeordnet sein kann.

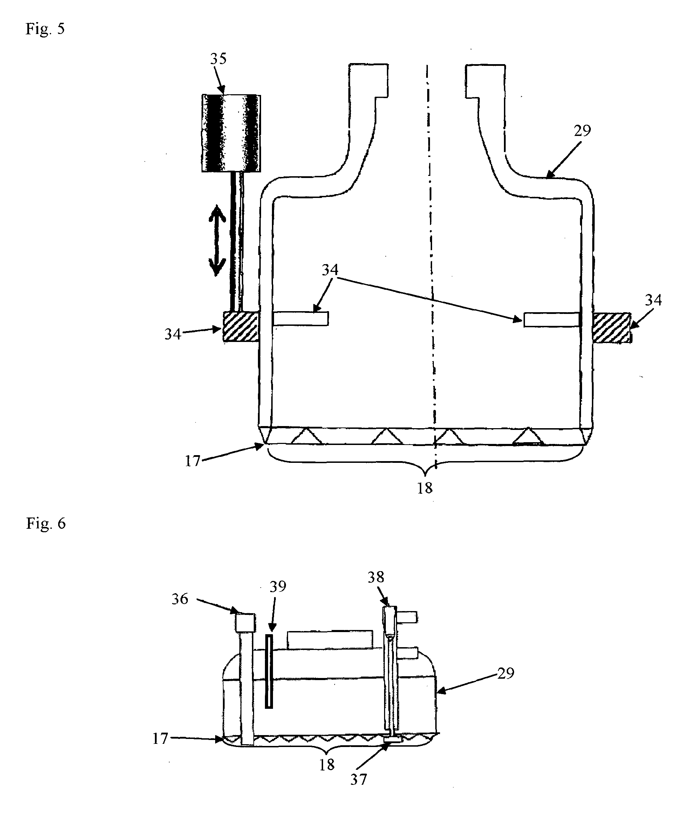

Figur 5 zeigt die Haltevorrichtung aus einem Leitungsabschnitt 29, dessen Schneidkante 17 die Ansaugöffnung 18 aufspannt. Gegenüber der Ansaugöffnung 18 ist der Anschluß für den Unterdruckerzeuger. Beispielhaft ist auf der Außen- und Innenseite ein Anschlag 34 angebracht, der über Wand des Leitungsabschnitts 29 ragt. Entsprechend der bevorzugten Ausführung ist der Anschlag einstellbar, z.B. durch eine Stellantrieb 35. Der Anschlag 34 ist vorzugsweise senkrecht zur Ansaugöffnung entlang des Leitungsabschnitts 29 verschieblich und weist eine Fläche auf, die etwa parallel zur Ansaugöffnung 18 liegt und dieser zugewandt ist. Der Stellantrieb 35 ist generell bevorzugt gesteuert, z.B. abhängig von einem Signal eines Näherungsschalters 37 und/oder eines Drucksensors 39, der zur Messung der Näherung eines Lebensmittels oder des Unterdrucks am oder innerhalb des Leitungsabschnitts 29 eingerichtet ist.

Figur 6 zeigt eine Abstoßeinrichtung 36, die als mit Druckluft beaufschlagbares Röhrchen oder als beweglicher Stößel ausgebildet sein kann, der z.B. elektrisch oder mit Druckluft angetrieben sein kann. Ein Näherungsschalter 37 ist mit einem die Ansaugöffnung 18 überragenden, druckempfindlichen Ende gezeigt und als alternative Ausführungsform mit einem Druckluftanschluß 38 für einen pneumatisch wirkenden Näherungsschalter 37. Ein optionaler Drucksensor 39 ist eingerichtet, den Unterdruck im Leitungsabschnitt 29 zu messen.

### Bezugszeichenliste:

| | | | |
|---|---|---|---|
| 1 | Zentralrohr | 20 | Ringkanalabschnitt |
| 1a | Außenwand des Zentralrohrs 1 | 21 | erste Anlagefläche |
| 2 | Zentralkanal | 22 | zweite Anlagefläche |
| 3 | erstes Ende des Zentralrohrs 1 | 23 | Ansatz des Zentralrohrs |
| 4 | konvexe Fläche | 24 | Stutzen |
| 5 | erste Öffnung | 25 | Trägerplatte |
| 6 | zweite Öffnung | 26 | Träger |
| 7 | ringförmige Auslassöffnung | 27 | Oberfläche des Stutzens |
| 8 | Eintrittskanal | 28 | Haltevorrichtung |
| 9 | Schulter | 29 | Leitungsabschnitt |
| 10 | zweite Ende des Zentralrohrs 1 | 30 | Antrieb |
| 11 | Leitung | 32 | Gitter |
| 12 | Druckluftanschluss | 33 | Stellglied |
| 13 | Gehäuse | 34 | Anschlag |
| 14 | Austrittskanal | 35 | Stellantrieb |
| 15 | Saugabschnitt | 36 | Abstoßeinrichtung |
| 16 | Rohrabschnitt | 37 | Näherungsschalter |
| 17 | Schneidkante | 38 | Druckluftanschluß |
| 18 | Ansaugöffnung | 39 | Drucksensor |
| 19 | Austrittsöffnung | | |

## Patentansprüche

1. Haltevorrichtung für ein Lebensmittel, die einen von einem Leitungsabschnitt (29) gebildeten Saugabschnitt (15) aufweist, der mit einem Unterdruckerzeuger verbunden ist und eine Ansaugöffnung (18) aufweist, deren Kante zumindest abschnittsweise als Schneidkante (17) ausgebildet ist, **dadurch gekennzeichnet, dass** die Schneidkante (17) mit einem motorischen Antrieb (30) verbunden ist, der eingerichtet ist, die Schneidkante (17) mit einer Frequenz von zumindest 1 Hz zu bewegen.

2. Haltevorrichtung nach Anspruch 1, **dadurch gekennzeichnet, dass** der motorische Antrieb eine Vibrationseinrichtung oder ein linearer und/oder rotierender Antrieb ist, der mit dem Leitungsabschnitt (29) verbunden ist und eingerichtet ist, auf den Leitungsabschnitt (29) zu wirken.

3. Haltevorrichtung nach einem der voranstehenden Ansprüche, **dadurch gekennzeichnet, dass** der Unterdruckerzeuger in einem Abstand zu einer Ansaugöffnung (18) eine um eine ringförmige Auslassöffnung (7) von einem Rohrabschnitt (16) beabstandete konvexe Oberfläche (4) aufweist, die eine erste Öffnung (5) eines in einem Zentralrohr (1) gebildeten Zentralkanals (2) aufspannt, wobei die konvexe Fläche (4) in einem axialen Abschnitt mit dem kleinsten Querschnitt des Zentralkanals (2) mündet, an welchen sich ein Abschnitt des Zentralkanals (2) anschließt, der sich bis zu einer der ersten Öffnung (5) gegenüberliegenden zweiten Öffnung (6) aufweitet, und die ringförmige Auslassöffnung (7) über einen Eintrittskanal (8) mit einem Druckluftanschluss (12) verbunden ist, wobei das Zentralrohr (1) längsverschieblich in einer Ausnehmung des Rohrabschnitts (16) geführt ist, bis eine erste Anlagefläche (21), die das Zentralrohr (1) auf seiner Außenfläche gegenüber dem Zentralkanal (2) aufweist, an einer dazu parallelen zweiten Anlagefläche (22) des Rohrabschnitts (16) anliegt, wobei das Zentralrohr (1) von einem Gehäuse (13) umfasst ist.

4. Haltevorrichtung nach Anspruch 3, **dadurch gekennzeichnet, dass** die ringförmige Auslassöffnung (7) von einem radial von der Längsachse des Zentralkanals (2) beabstandeten Abschnitt der konvexen Fläche (4) und einer axial von dieser beabstandeten Schulter (9) gebildet wird, die die konvexe Fläche (4) zumindest in einem ringförmigen Bereich überdeckt und das Zentralrohr (1) in einer Ausnehmung eines Stutzens (24) des Rohrabschnitts (16) geführt ist und die zweite Anlagefläche (22) die Ausnehmung des Stutzens (24) umfasst.

5. Haltevorrichtung nach einem der Ansprüche 3 bis 4, **dadurch gekennzeichnet, dass** die der ersten Öffnung (5) gegenüberliegende zweite Öffnung (6) des Zentralrohrs (1) mittels eines Ventils zumindest teilweise verschließbar ist, das an der zweiten Öffnung (6) oder an einer Leitung angeordnet ist, die an der zweiten Öffnung (6) des Zentralrohrs (1) angeschlossen ist und den Austrittskanal (14) bildet.

6. Haltevorrichtung nach einem der Ansprüche 3 bis 5, **dadurch gekennzeichnet, dass** der Eintrittskanal (8) abschnittsweise von der Außenwandung (10) des Zentralrohrs (1) und einer koaxial angeordneten beabstandeten Leitung (11) gebildet wird.

7. Haltevorrichtung nach einem der Ansprüche 3 bis 6, **dadurch gekennzeichnet, dass** am Zentralrohr (1) ein Stellglied (33) angeordnet ist, mit dem das Zentralrohr (1) zumindest abschnittsweise gegenüber der Schulter (9) des Rohrabschnitts (16) beweglich ist.

8. Haltevorrichtung nach Anspruch 7, **dadurch gekennzeichnet, dass** ein Drucksensor (39) und/oder ein Näherungsschalter (37) im Saugabschnitt angeordnet ist und das Stellglied (33) in Abhängigkeit vom Messsignal des Drucksensors (39) und/oder des Näherungsschalters (37) steuerbar ist.

9. Haltevorrichtung nach einem der Ansprüche 3 bis 8, **dadurch gekennzeichnet, dass** ein Drucksensor (39) und/oder ein Näherungsschalter (37) am Rohrabschnitt (16) angeordnet ist und der motorische Antrieb (30) abhängig vom Signal des Drucksensors (39) und/oder des Näherungsschalters (37) gesteuert ist.

10. Haltevorrichtung nach einem der Ansprüche 3 bis 9, **dadurch gekennzeichnet, dass** das Zentralrohr (1) mit dem Rohrabschnitt (16) mittels eines Bajonettverschlusses oder eines Gewindes verrastet ist.

11. Haltevorrichtung nach einem der Ansprüche 3 bis 10, **dadurch gekennzeichnet, dass** das Gehäuse (13) in einem Abstand zur zweiten Öffnung (6) angeordnet ist und einen Austrittskanal (14) umfasst, der in einer Austrittsöffnung (19) mündet, die durch den Rohrabschnitt (16) und das Gehäuse (13) begrenzt ist und auf die Ebene gerichtet ist, in der die Ansaugöffnung (18) liegt.

12. Haltevorrichtung nach Anspruch 11, **dadurch gekennzeichnet, dass** der Stutzen (24) eine kontinuierliche Oberfläche (27) aufweist, die sich von der zweiten Anlagefläche (22) zur Austrittsöffnung (19) erstreckt und gegen die Längsachse des Zentralrohrs (1) geneigt ist.

13. Haltevorrichtung nach einem der Ansprüche 3 bis 12, **dadurch gekennzeichnet, dass** das Zentralrohr (1) von einem ersten Abschnitt und einem entlang der Längsachse des Zentralkanals (2) verschieblichen zweiten Abschnitt gebildet wird.

14. Haltevorrichtung nach einem der Ansprüche 3 bis 13, **dadurch gekennzeichnet, dass** die konvexe Fläche (4) ein radial zur Längsmittelachse des Zentralkanals (2) parabelförmiges Profil aufweist, dessen Steigung mit abnehmendem Radius des Zentralkanals (2) zunimmt.

15. Haltevorrichtung nach einem der Ansprüche 3 bis 14, **dadurch gekennzeichnet, dass** sie ein Ventil aufweist, das eingerichtet ist, die Leitung (11) für die Druckluftzufuhr zur ringförmigen Auslassöffnung (7) zu öffnen.

16. Haltevorrichtung nach einem der Ansprüche 3 bis 15, **dadurch gekennzeichnet, dass** die ringförmige Schulter (9) des Unterdruckerzeugers starr mit dem Rohrabschnitt (16) verbunden ist.

17. Haltevorrichtung nach einem der voranstehenden Ansprüche, **gekennzeichnet durch** einen Näherungsschalter (37) und/oder einen zur Messung des Unterdrucks innerhalb des Rohrabschnitts (16) eingerichteten Drucksensor (39) und einen Anschlag (34), der mittels eines vom Signal des Näherungsschalters (37) und/oder vom Signal des Drucksensors (39) abhängig gesteuerten Stellantriebs (35) entlang des Rohrabschnitts (16) verschieblich ist.

18. Haltevorrichtung nach einem der Ansprüche 3 bis 17, **dadurch gekennzeichnet, dass** der Rohrabschnitt (16) starr mit dem Leitungsabschnitt (29) verbunden ist und der motorische Antrieb eine Vibrationseinrichtung ist, die in oder auf dem Rohrabschnitt (16) oder in oder an einer mit dem Rohrabschnitt (16) starr verbundenen Trägerplatte (25) angeordnet ist.

19. Verfahren zur Herstellung eines Lebensmittels mit dem Schritt des Schneidens des Lebensmittels in Scheiben, **gekennzeichnet durch** das Halten des Lebensmittels mit einer Haltevorrichtung nach einem der voranstehenden Ansprüche mittels Ansaugens des Lebensmittels gegen die die Ansaugöffnung (5) zumindest abschnittsweise umgebende Schneidkante (17) und Beaufschlagen der Schneidkante (17) mit Schwingungen.

20. Verfahren nach Anspruch 19, bei dem ein Druckluftanschluss (12) der Haltevorrichtung mit Druckluft beaufschlagt wird, die durch einen damit verbundenen Eintrittskanal (8) durch eine ringförmige Auslassöffnung (7) zumindest anteilig tangential gegen einen konvexe Fläche (4) strömt, die eine erste Öffnung (5) eines Zentralkanals (2) aufspannt, der sich zu einem Abschnitt mit geringstem Querschnitt verjüngt und in einem anschließenden Abschnitt bis zu einer der ersten Öffnung (5) gegenüberliegenden zweiten Öffnung (6) aufweitet, wobei ein Rohrabschnitt (16) die Ansaugöffnung (18) mit der ersten Öffnung (5) verbindet und der Gegenstand gegen die von einem Rohrabschnitt (16) aufgespannte Ansaugöffnung (18) angeordnet wird, **dadurch gekennzeichnet, dass** die Beaufschlagung mit Druckluft unterbrochen wird, das Zentralrohr (1) vom Rohrabschnitt (16) weg bewegt wird, Rohrabschnitt (16) und Zentralrohr (1) voneinander beabstandet gereinigt werden und anschließend das Zentralrohr (1) in einem Abstand zum Rohrabschnitt (16) angeordnet wird, bevor der Unterdruckerzeuger mit Druckluft beaufschlagt wird.

21. Verfahren nach Anspruch 20, **dadurch gekennzeichnet, dass** aus der zweiten Öffnung (6) des Zentralkanals (2) austretende Druckluft in Mischung mit durch die Ansaugöffnung (18) angesaugter Luft und angesaugten festen und flüssigen Bestandteilen durch eine Austrittsöffnung (15) austreten gelassen wird, die durch einen Austrittskanal (14) mit der zweiten Öffnung (6) verbunden ist und die zu der Ebene hin offen ist, in der die Ansaugöffnung (18) angeordnet ist.

22. Verfahren nach Anspruch 20 oder 21, **dadurch gekennzeichnet, dass** das Lebensmittel zumindest abschnittsweise ein harte Oberfläche und/oder an die Oberfläche angrenzende Knochen und/oder Sehnen aufweist.

## Claims

1. Gripper device for a food which has a suction section (15) formed by a conduit section (29) and connected to a low pressure generator and having a suction opening (18), the edge of which at least sectionwise is formed as a cutting edge (17), **characterized in that** the cutting edge (17) is connected to a motor drive (30) disposed to move the cutting edge (17) at the frequency of at least 1 Hz.

2. Gripper device according to claim 1, **characterized in that** the motor drive is a vibratory device or a linear and/or rotating drive which is connected to the conduit section (29) and is disposed to act on the conduit section (29).

3. Gripper device according to one of the preceding claims, **characterized in that** the low pressure generator in a distance to the suction opening (18) has a convex surface (4) spaced from a pipe section (16) by an annular outlet opening (7), wherein the convex surface (4) opens up a first opening (5) of a central channel (2) formed in a central well (1), wherein the convex surface (4) leads into an axial section having the smallest cross-section of the central channel (2) to which a section of the central channel (2) adjoins that broadens towards a first opening (5) lying opposite the second opening (6), and the annular outlet opening (7) is connected to a compressed air connection (12) by an inlet duct (8), wherein the central well (1) is guided longitudinally displaceable in a recess of the pipe section (16) until a first abutment face (21) provided on the outer surface of the central well (1) opposite the central channel (2) lies against a second abutment face (22) parallel thereto of the pipe section (16), wherein the central well (1) is encompassed by a housing (13).

4. Gripper device according to claim 3, **characterized in that** the annular outlet opening (7) is formed by a section of the convex surface (4) which is spaced radially from the longitudinal axis of the central channel (2) and by a shoulder (9) which is spaced axially thereto which at least in an annular region covers the convex surface (4) and the central well (1) is guided in a recess of a socket (24) of the pipe section (16), and the second abutment face (22) encompasses the recess of the socket (24).

5. Gripper device according to one of claims 3 to 4, **characterized in that** the second opening (6) of the central well (1) lying opposite the first opening (5) is closable at least partially by means of a valve, the valve being arranged at the second opening (6) or in a conduit connected to the second opening (6) of the central well (1), forming the exit channel (14).

6. Gripper device according to one of claims 3 to 4, **characterized in that** inlet duct (8) is sectionally formed by the outer wall (10) of the central well (1) and by a coaxially arranged spaced conduit (11).

7. Gripper device according to one of claims 3 to 6, **characterized in that** at the central well (1) an actuator (33) is arranged by which the central well (1) is at least sectionally moveable in relation to the shoulder (9) of the pipe section (16).

8. Gripper device according to claim 7, **characterized in that** a pressure sensor (39) and/or a proximitiy sensor (37) is arranged in the suction section and the actuator (33) is controllable in dependence on the measuring signal of the pressure sensor (39) and/or of the proximitiy sensor (37).

9. Gripper device according to one of claims 3 to 8, **characterized in that** a pressure sensor (39) and/or a proximitiy sensor (37) is arranged at the pipe section (16) and the motor drive (30) is controlled in dependence on the measuring signal of the pressure sensor (39) and/or of the proximitiy sensor (37).

10. Gripper device according to one of claims 3 to 9, **characterized in that** the central well (1) is latched to the pipe section (16) by means of a bayonet catch or by a thread.

11. Gripper device according to one of claims 3 to 10, **characterized in that** the housing (13) is arranged at a distance to the second opening (6) and encompasses an outlet duct (14) leading into an outlet opening (19) which is delimited by the pipe section (16) and the housing (13) and is directed towards the plane in which the suction opening (18) lies.

12. Gripper device according to claim 11, **characterized in that** the socket (24) has a continuous surface (27) which extends from the second abutment face (22) to the outlet opening (19) and is inclined against the longitudinal axis of the central well (1).

13. Gripper device according to one of claims 3 to 12, **characterized in that** the central well (1) is formed by a first section and a second section which is movable along the longitudinal axis of the central channel (2).

14. Gripper device according to one of claims 3 to 13, **characterized in that** the convex surface (4) has a parabolic profile radial to the longitudinal axis of the central channel (2), the incline of which increases with decreasing radius of the central channel (2).

15. Gripper device according to one of claims 3 to 14, **characterized in that** it has a valve which is disposed to open the conduit (11) for the compressed-air supply to the annular outlet opening (7).

16. Gripper device according to one of claims 3 to 15, **characterized in that** the annular shoulder (9) of the low pressure generator is connected rigidly to the pipe section (16).

17. Gripper device according to one of the preceding claims, **characterized by** a proximity sensor (37) and/or a pressure sensor (39) disposed for measuring the low pressure within the pipe section (16) and a limit stop (34) which is movable along the pipe section (16) by means of an actuator (35) controlled in dependence on a signal of the proximity sensor (37) and/or on the signal of the pressure sensor (39).

18. Gripper device according to one of claims 3 to 17, **characterized in that** the pipe section (16) is connected rigidly to the conduit section (29) and the motor drive is a vibratory device which is arranged in or on the pipe section (16) or in or on a carrier plate (25) that is connected rigidly to the pipe section (16).

19. Process for producing a food comprising the step of cutting the food into slices, **characterized by** gripping the food by a gripper device according to one of the preceding claims by means of sucking the food against the cutting edge (17) surrounding the suction opening (5) at least sectionwise and applying vibrations to the cutting edge (17).

20. Process according to claim 19, wherein a compressed-air connection (12) of the suction gripper is loaded with compressed air which flows through an annular outlet (7) via an inlet duct (8) connected thereto at least partially tangentially against a convex surface (4) opening up a first opening (5) of a central channel (2) which tapers towards a section having the smallest cross-section and which in an adjoining section broadens towards a second opening (6) opposite the first opening (5), wherein a pipe section (16) connects the suction opening (18) to the first opening (5) and the object is arranged against the suction opening (18) opened up by a pipe section (16), **characterized in that** the loading with compressed air is interrupted, the central well (1) is removed from the pipe section (16), the pipe section (16) and the central well (1) are cleaned while spaced from one another, and subsequently the central well (1) is arranged at a distance to the pipe section (16), prior to the suction gripper being loaded by compressed air.

21. Process according to claim 20, wherein compressed air exiting the second opening (6) of the central channel (2) in admixture with air sucked in through the suction opening (18) and sucked-up solid and liquid components exits through an outlet opening (15) which is connected to the second opening (6) by an outlet duct (14) and which is open in the direction to the plane in which the suction opening (18) is arranged.

22. Process according to claim 20 or 21, **characterized in that** the food at least sectionwise has a hard surface and/or bone and/or tendons bordering on the surface.

## Revendications

1. Dispositif de maintien pour aliment, présentant une partie aspiration (15) constituée d'une portion de conduit (29), qui est reliée à un générateur de vide et présente une ouverture d'aspiration (18), dont la tranche est conçue au moins par sections comme bord tranchant (17), **caractérisé en ce que** le bord tranchant (17) est relié à un entraînement motorisé (30), qui est configuré pour mouvoir le bord tranchant (17) à une fréquence d'au moins 1 Hz.

2. Dispositif de maintien selon la revendication 1, **caractérisé en ce que** l'entraînement motorisé est un dispositif vibrant ou bien un entraînement linéaire et/ou rotatif, qui est relié à la portion de conduit (29) et est configuré pour agir sur la portion de conduit (29).

3. Dispositif de maintien selon l'une des revendications précédentes, **caractérisé en ce que** le générateur de vide présente une surface convexe (4) espacée d'une partie tubulaire (16) autour d'une ouverture d'évacuation annulaire (7), à une certaine distance d'une ouverture d'aspiration (18), qui recouvre une première ouverture (5) d'un canal central (2) constitué dans un tube central (1), où la face convexe (4) émerge dans une portion axiale avec la section transversale la plus petite du canal central (2), portion à laquelle se raccorde une portion du canal central (2), qui s'élargit jusqu'à une second ouverture (6) opposée à la première ouverture (5), et que l'ouverture d'évacuation annulaire (7) est reliée à un raccord d'air comprimé (12) par le biais d'un canal d'entrée (8), où le tube central (1) est guidé mobile dans le sens de la longueur dans un évidement de la partie tubulaire (16), jusqu'à ce qu'une première surface d'appui (21), présentant le tube central (1) sur sa face externe opposée au canal central (2), repose sur une seconde surface d'appui (22) parallèle de la partie tubulaire (16), où le tube central (1) est entouré d'un logement (13).

4. Dispositif de maintien selon la revendication 3, **caractérisé en ce que** l'ouverture d'évacuation annulaire (7) est constituée d'une partie de la surface convexe (4), partie espacée radialement du canal central (2), et d'un épaulement (9) espacé axialement de ladite surface convexe, épaulement recouvrant la surface convexe (4) au moins dans une zone annulaire et que le tube central (1) est guidé mobile dans un évidement d'un montant (24) de la partie tubulaire (16) et la seconde surface d'appui (22) contient l'évidement du montant (24).

5. Dispositif de maintien selon l'une des revendications 3 à 4, **caractérisé en ce que** la seconde ouverture (6) du tube central (1) opposée à la première ouverture (5) peut être obturée au moins partiellement à l'aide d'une soupape, qui est disposée au niveau de la seconde ouverture (6) ou d'un conduit, qui est raccordé à la seconde ouverture (6) du tube central et constitue le canal de sortie (14).

6. Dispositif de maintien selon l'une des revendications 3 à 5, **caractérisé en ce que** le canal d'entrée (8) est constitué, par sections, de la paroi externe (10) du tube central (1) et d'un conduit (11) espacé coaxialement.

7. Dispositif de maintien selon l'une des revendications 3 à 6, **caractérisé en ce qu'**un élément de réglage (33) est disposé au niveau du tube central (1), élément de réglage avec lequel le tube central (1) est mobile au moins par sections par rapport à l'épaulement (9) de la partie tubulaire (16).

8. Dispositif de maintien selon la revendication 7, **caractérisé en ce qu'**un capteur de pression (39) et/ou un interrupteur de proximité (37) est prévu dans la partie aspiration et que l'élément de réglage (33) est manoeuvrable en fonction du signal de mesure du capteur de pression (39) et/ou de l'interrupteur de proximité (37).

9. Dispositif de maintien selon l'une des revendications 3 à 8, **caractérisé en ce qu'**un capteur de pression (39) et/ou un interrupteur de proximité (37) est prévu dans la partie aspiration et que l'entraînement motorisé (30) est actionné en fonction du signal du capteur de pression (39) et/ou de l'interrupteur de proximité (37).

10. Dispositif de maintien selon l'une des revendications 3 à 9, **caractérisé en ce que** le tube central (1) est verrouillé avec la partie tubulaire (16) au moyen d'une fermeture à baïonnette ou d'un filet.

11. Dispositif de maintien selon l'une des revendications 3 à 10, **caractérisé en ce que** le logement (13) est prévu à une certaine distance de la seconde ouverture (6) et comprend un canal de sortie (14), qui émerge dans une ouverture de sortie (19), laquelle ouverture est limitée par la partie tubulaire (16) et le logement (13) et est orientée sur le plan dans lequel repose l'ouverture d'aspiration (18).

12. Dispositif de maintien selon la revendication 11, **caractérisé en ce que** le montant (24) présente une surface continue (27), laquelle s'étend de la seconde surface d'appui (22) à l'ouverture de sortie (19) et est inclinée contre l'axe longitudinal du tube central (1).

13. Dispositif de maintien selon l'une des revendications 3 à 12, **caractérisé en ce que** le tube central (1) est constitué d'une première section et d'une seconde section que l'on peut déplacer le long de l'axe longitudinal du canal central (2).

14. Dispositif de maintien selon l'une des revendications 3 à 13, **caractérisé en ce que** la surface convexe (4) présente un profil en forme de parabole, radial par rapport à l'axe médian longitudinal du canal central (2), profil dont le pas augmente tandis que le rayon du canal central (2) décroît.

15. Dispositif de maintien selon l'une des revendications 3 à 14, **caractérisé en ce qu'**il possède une soupape qui est conçue pour ouvrir le conduit (11) prévu pour l'arrivée d'air comprimé vers l'ouverture d'évacuation annulaire (7).

16. Dispositif de maintien selon l'une des revendications 3 à 15, **caractérisé en ce que** l'épaulement annulaire (9) du générateur de vide est relié fixement à la partie tubulaire (16).

17. Dispositif de maintien selon l'une des revendications précédentes, **caractérisé par** un interrupteur de proximité (37) et/ou un capteur de pression conçu pour mesurer la dépression à l'intérieur de la partie tubulaire (16) de même qu'une butée (34), butée mobile le long de la partie tubulaire (16) à l'aide d'un élément de réglage en fonction du signal de l'interrupteur de proximité (37) et/ou du signal du capteur de pression (39).

18. Dispositif de maintien selon l'une des revendications 3 à 17, **caractérisé en ce que** la partie tubulaire (16) est reliée fixement à la portion de conduit (29) et l'entraînement motorisé est un dispositif vibrant, qui est prévu dans ou sur la partie tubulaire (16) ou bien dans ou sur la plaque porteuse reliée fixement à la partie tubulaire (16).

19. Procédé de fabrication d'un aliment comprenant la phase de découpe de l'aliment en tranches, **caractérisé par** le maintien de l'aliment à l'aide d'un dispositif de maintien selon l'une des revendications précédentes en aspirant l'aliment contre le bord tranchant (17) entourant l'ouverture d'aspiration (5) au moins par sections et en soumettant le bord tranchant (17) à des vibrations.

20. Procédé selon la revendication 19, dans lequel un raccord d'air comprimé (12) du dispositif de maintien reçoit de l'air comprimé, air comprimé s'écoulant à travers un canal d'entrée (8) reliée à celui-ci, à travers une ouverture d'évacuation annulaire (7) au moins partiellement tangentiellement contre une surface convexe (4), qui recouvre une première ouverture (5) d'un canal central (2), allant rétrécissant jusqu'à une section de section transversale minimale et qui s'élargit dans une section suivante jusqu'à une seconde ouverture (6) opposée à la première ouverture (5), où une partie tubulaire (16) relie l'ouverture d'aspiration (18) à la première ouverture (5) et l'objet est disposé contre l'ouverture d'aspiration (18) recouverte d'une partie tubulaire (16), **caractérisé en ce que** l'arrivée d'air comprimé est interrompue, que le tube central (1) est écarté de la partie tubulaire (16), que la partie tubulaire (16) et le tube central (1) sont nettoyés à une certaine distance l'un de l'autre puis que le tube central (1) est prévu à une certaine distance de la partie tubulaire (16), avant que le générateur de vide ne reçoive de l'air comprimé.

21. Procédé selon la revendication 20, **caractérisé en ce que** l'air comprimé sortant de la seconde ouverture (6) du canal central (2) est expulsé à travers une ouverture d'évacuation (15) après mélange avec l'air aspiré à travers l'ouverture d'aspiration (18) et les composantes solides et liquides aspirées, ouverture d'évacuation reliée à la seconde ouverture (6) à travers un canal de sortie (14) et ouverte en direction du plan dans lequel est disposée l'ouverture d'aspiration (18).

22. Procédé selon la revendication 20 ou 21, **caractérisé en ce que** l'aliment possède au moins dans certaines sections une surface dure et/ou des os et/ou des tendons jouxtant la surface.
